# EUROPEAN PATENT APPLICATION

(11) **EP 4 467 330 A1**
(43) Date of publication of application: **27.11.2024**
(21) Application number: 23305833.8
(22) Date of filing: 25.05.2023
(51) Int. Cl.: B29D 11/00

(54) **OPTICAL DEVICE**

(71) Applicant: STMicroelectronics International N.V., 1228 Plan-les-Ouates, Geneva (CH)
(72) Inventor: CAMPBELL, Colin, DARVEL KA17 0LG (GB); MEZIANE, Farida, 38000 Grenoble (FR); HAJJI, Asma, 38500 Voiron (FR)
(74) Representative: Cabinet Beaumont

(57) **Abstract**

The present disclosure relates to an optical device (100, 400) comprising at least a first and a second optical component (120,140) attached together with a first transparent adhesive film (130) having at least two adhesive surfaces.

## Description

### Technical field

The present disclosure relates generally to optical devices and related fabricating methods.

### Background art

Optical components such as lenses or filters are often used in optical devices assemblies. In small packaged devices, such as time of flight (TOF) measurement devices, the space available to assemble these optical devices is extremely tight. It results, with nowadays assembly solutions, in optical degradation of the light transmitted through the optical devices.

### Summary

There is a need to provide optical devices with improved optical performances.

One embodiment addresses all or some of the drawbacks of known optical devices.

One embodiment provides an optical device comprising at least a first and a second optical component attached together with a first transparent adhesive film having at least two adhesive surfaces.

One embodiment provides a method for fabricating an optical device, comprising a step of attaching together a first and a second optical component with a first transparent adhesive film having at least two adhesive surfaces.

According to an embodiment, the attaching step comprises of:
- attaching the first transparent adhesive film on a surface of an array of first optical component to be individualized from each other;
- processing the array and the attached adhesive film to obtain at least one individualized first optical component with its respective individualized adhesive film attached onto;
- picking said at least one individualized first optical component with its respective film attached onto;
- aligning the picked first optical component(120), with at least one second optical component; and
- applying pressure on the aligned first and/or second optical component for the first and second optical component to be attached together with the adhesive film.

According to an embodiment, the method further comprises the steps:
- attaching a second transparent adhesive film, having at least two adhesive surfaces, on a surface of an array of third optical components to be individualized from each other;
- processing said array of third optical components and the attached second transparent adhesive film to obtain at least one individualized third optical component with its respective individualized adhesive film attached onto;
- picking said at least one individualized third optical components with its respective film attached onto;
- aligning the picked third optical component with a surface of an ensemble formed by the attached first and second optical component; and
- applying pressure on the third optical component, and/or on the ensemble formed by the attached first and second optical component, for the third optical component and said ensemble to be attached together with said second transparent adhesive film.

According to an embodiment, the picked third optical component is aligned with, and attached to, a surface of the first optical element of the ensemble.

According to an embodiment, the picked third optical component is aligned with, and attached to, a surface of the second optical element of the ensemble.

According to an embodiment, the method further comprises the steps:
- apply an ultraviolet light irradiation treatment to the first transparent adhesive film; and
- apply a temperature treatment between 90 and 160°C after having applied pressure.

According to an embodiment, the first transparent adhesive film has an optical transmittance above 50%, preferably above 90%, for wavelengths from 400nm to 1200nm.

According to an embodiment, the optical device comprises a third optical component attached, with a second transparent adhesive film having at least two adhesive surfaces, to an ensemble formed by the attached first and second optical component.

According to an embodiment, the second transparent adhesive film has an optical transmittance above 50%, preferably above 90%, for wavelengths from 400nm to 1200nm.

According to an embodiment, the first transparent adhesive film is a dicing die attach film.

According to an embodiment, the first transparent adhesive film has a thickness between 10 and 35pm.

According to an embodiment, the first transparent adhesive film has an optical index between 1,3 and 1,5.

According to an embodiment, the first optical component is a lens, or an ultraviolet or visible or infrared light filter.

According to an embodiment, the second optical component is a lens, or an ultraviolet or visible or infrared light filters, or an optoelectronic device configured to convert incoming light into a signal, or an optoelectronic device configured to emit light when a signal is applied to it.

According to an embodiment, the first transparent adhesive film is an acrylic film.

According to an embodiment, the first transparent adhesive film has at least one opening.

According to an embodiment, the second transparent adhesive film is similar to the first transparent adhesive film.

One embodiment provides a time-of-flight sensor comprising:
- a first optoelectronic device configured to emit light into an image scene; and
- a second optoelectronic device separated from the first optoelectronic device and configured to detect light reflected by the image scene;
the first and/or the second optoelectronic devices comprising the optical device as described above.

### Brief description of drawings

The foregoing features and advantages, as well as others, will be described in detail in the following description of specific embodiments given by way of illustration and not limitation with reference to the accompanying drawings, in which:
Figure 1 illustrates an optical device according to an embodiment;
Figure 2 illustrates transmission light profile through the optical device of Figure 1 in a first case;
Figure 3 illustrates transmission light profile through the optical device of Figure 1 in a second case;
Figure 4 illustrates an optical device according to another embodiment;
Figure 5 illustrates a method of fabricating the optical device of Figure 1 according to an embodiment;
Figure 6 illustrates another method of fabricating the optical device of Figure 1 according to an embodiment;
Figure 7 illustrates a method of fabricating the optical device of Figure 4 according to an embodiment; and
Figure 8 illustrates a cross section view of a time of flight sensor according to an embodiment.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

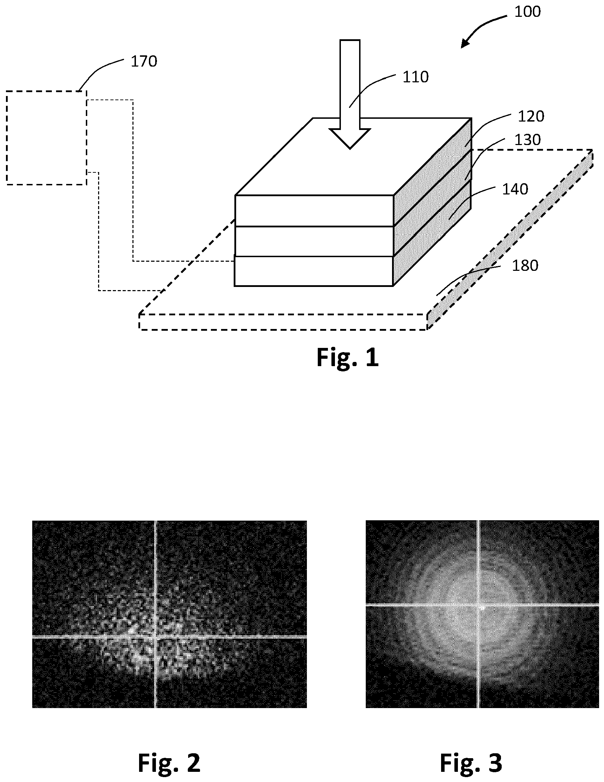

Figure 1 illustrates an optical device 100 according to an embodiment. In the represented example, the optical device comprises a first and a second optical components 120, 140 attached together with a holding element 130.

In the represented example, a light ray 110 is injected in the direction of the first optical component 120 and passes through the holding element 130 and reaches the second optical component 140 or go through the second optical component 140 depending on the nature of the second optical component 140.

In the case where light can go through the second optical component 140, a treatment unit 170 with an optical sensor 180 can be configured to obtain an image of light passing through the ensemble made of the first optical component 120, the holding element 130 and the second optical component 140. Such image can be seen on Figure 2.

The first optical component 120 is for example a lens, or an ultraviolet or visible or infrared light filter.

The second optical component 140 is for example a lens, or an ultraviolet or visible or infrared light filter, or an optoelectronic device configured to convert incoming light into a signal, or an optoelectronic device configured to emit light when a signal is applied to it.

The term filter means that the flirter is configured to block fully or partially some dedicated wavelengths.

In the case where the second optical component 140 is an optoelectronic device configured to convert incoming light into a signal, said signal can be processed by the treatment unit 170 to obtain an image of light passing through the first optical component 120 and the holding element 130.

In an example, the holding element 130 is a glue layer, for example made of epoxy, obtained by depositing an amount of glue, for example according to a cross-like shape, on a surface of the first or the second optical component 120, 140 and by pressing the first and the second optical component together with the glue film in between. The amount of glue is hardly controllable on the micron scale. Moreover, the optical properties of the glue layer are not satisfying as it can further be seen on Figure 2.

The different embodiments propose that the holding element to be a first transparent adhesive film 130 having at least two adhesive surfaces. The transparent adhesive film 130 has the advantage of having a controllable thickness and better optical properties as it can be seen in Figure 3 as compared to Figure 2.

The term "film" means, in the following, an entity which has self withstanding and homogenous thickness by itself and prior any pressure to be applied on it. On the contrary, the glue layer has, when deposited, a viscous liquid behavior with line tension effects leading to a thickness depending on the distance to the liquid edges. When pressure is applied on the glue layer, the liquid is pushed toward edges of the optical components and may overflow. The adhesive film, when pressurized, will not act as liquid and tend not to overflow due to stronger bonds in film structure.

One of the adhesive surfaces is for example oriented toward the first optical component 120 and the other adhesive surface is for example oriented toward the second optical element 140.

In an example, the first transparent adhesive film 130 has an optical transmittance above 50%, preferably above 90%, for wavelengths from 400nm to 1200nm or even for wavelengths from 400nm up to 1500nm or more. It provides less interferences and limits optical aberrations. In other words, for some few of the wavelengths between 400 nm and 1200nm or 1500nm, the transmittance may be less than 90% due to very specific absorption frequencies but more than 95% of the wavelengths of the range between 400nm and 1200nm or even up to 1500nm are transmitted by more than 90%. In some cases, the first transparent adhesive film 130 has a transmittance over 90% specifically for wavelengths in the infrared range, for example the near and/or the far infrared.

The first adhesive film 130 is for example a dicing die attach film. The first adhesive film 130 has for example a thickness between 5µm and 60pm and for example between 10 and 35pm. In another example, the first adhesive film has an optical index between 1,3 and 1,5, for example 1,45 which allows an optical index match between the optical components 120, 140 and the first adhesive film 130 to reduce reflections and/or interferences. In another example, the first adhesive film 130 is an acrylic film which enhance the transmittance.

In an example, the first optical component 120 is a lens and the second optical component 140 is a filter, for example a near infrared filter, and the first transparent adhesive films 130 is a dicing die attach film of 10 to 30pm thickness and with a transmittance above 90% between 400nm and 1200nm.

In another example, the first optical component 120 is a lens or a filter, for example a near infrared filter, and the second optical component 140 is an optoelectronic device configured to convert incoming light into a signal and the first transparent adhesive films 130 is a dicing die attach film of 10 to 30pm thickness and with a transmittance above 90% between 400nm and 1200nm.

In some cases, the first adhesive film 130 has at least one opening. In an example, this opening is of the size of, or larger than, an optical sensor of the optoelectronic device formed by the second optical component 140. It could allow a local transmittance of almost 100% while keeping the first and second optical components attached together.

Figure 2 illustrates transmission light profile through the optical device of Figure 1 in a first case. More precisely, in the example of Figure 2, the holding element 130 is a glue layer. One can see that, transmitted light pattern observed when light ray 110 passes through the first and second optical components 120, 140, show dispersed and diffusive points. It leads to a loss of accuracy.

Figure 3 illustrates transmission light profile through the optical device of Figure 1 in a second case. More precisely, in this second case, the holding element 130 is the first adhesive film 130 which, in this case, is a dicing die attach film. Different thicknesses of the adhesive film between 5 and 35 µm do not change drastically the observed optical transmission pattern.

In this example, a well-defined concentrically arranged pattern is observed. It renders the impact of the holding element predictable for further calculations, for example for time of flight calculations. It allows also an accuracy increase in said calculations.

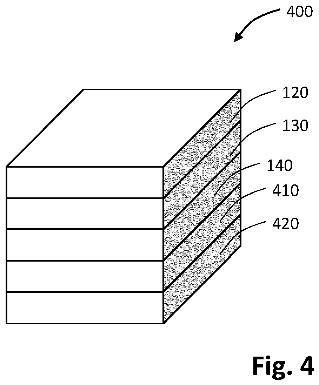

Figure 4 illustrates an optical device 400 according to another embodiment.

The example of Figure 4 is similar to the example of Figure 1 with the holding element being a first transparent adhesive film but with an additional second transparent adhesive film 410 attaching the second optical component 140 to a third optical component 420. The second transparent adhesive film 410 has at least two adhesive surfaces, one facing the second optical component 140 and another facing the third optical component 420.

The third optical component 420 is for example a lens, or an ultraviolet or visible or infrared light filters, or an optoelectronic device configured to transform incoming light into a signal, or an optoelectronic device configured to emit light when a signal is applied to it.

The second adhesive film has for example an optical transmittance above 50%, preferably above 90%, for wavelengths from 400nm to 1200nm or even up 1500nm.

In an example, the first and second transparent adhesive films have similar thickness range. In an example, the first and second transparent adhesive films are similar, for example of the same nature, for example a dicing die attach film.

In another example, the second adhesive film has at least one opening.

In an example, the first optical component 120 is a lens, the second optical component 140 is a filter, for example a near infrared filter, the third optical component 420 is an optoelectronic device configured to convert incoming light into a signal, and first and second transparent adhesive films 130, 410 are dicing die attach film of 10 to 30pm thickness and with a transmittance above 90% between 400nm and 1200nm.

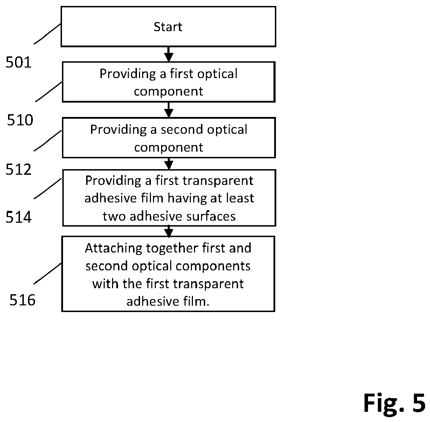

Figure 5 illustrates a method of fabricating the optical device 100 of Figure 1 according to an embodiment. More precisely, the Figure 5 illustrates a method for fabricating the optical device 100, which comprises a first step 501 (Start) to start the method.

In a further step 510 (Providing a first optical component), the first optical component 120 is provided.

In another step 512 (Providing a second optical component), the second optical component 140 is provided.

In another step 514 (Providing a first transparent adhesive film having at least two adhesive surfaces), the first transparent adhesive film 130 is provided.

In a further step 516 (Attaching together first and second optical components with the first transparent adhesive film), the first and the second optical components 120,140 are attached together with the first adhesive film 130.

Other non-illustrated steps may consist of:
- applying an ultraviolet light irradiation treatment to the first adhesive film 130 after or before assembling the first and second optical component; and/or
- applying a temperature treatment between 90 and 160°C after assembling of the first and second optical component.

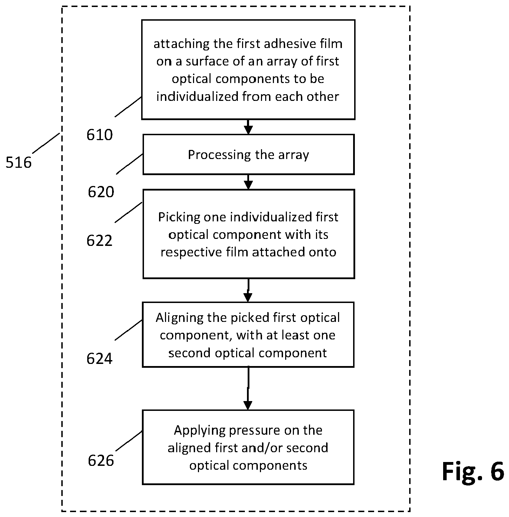

Figure 6 illustrates another method of fabricating the optical device of Figure 1 according to an embodiment. More precisely, the example of Figure 6 is an embodiment of step 516 of Figure 5.

Step 516 comprises for example a step 610 (attaching the first adhesive film on a surface of an array of first optical components to be individualized from each other). The array of the first optical components 120, is for example a wafer made of adjacent first optical components 120 and from where first optical components 120 can be individualized or separated. The first transparent adhesive film is for example pealed of a protection layer and applied to a surface of the whole array or a part of the array.

In a further step 620 (Processing the array), the array is for example cut or processed or machined to separate or individualize the first optical components 120 from each other. Each of the processed first optical components 120 is attached to a part of the first transparent adhesive film 130 which has for example the same size or footprint as the individualized first optical component 120.

In a further step 622 (Picking one individualized first optical component with its respective film attached onto), al least one of the one individualized first optical component 120, attached to its respective first transparent adhesive film 130, is picked, for example by tools used for pick and place operations.

In a further step 624 (Aligning the picked first optical component, with at least one second optical component), the picked first optical component 120 is aligned with a surface of the second optical component 140.

In a further step 626 (Applying pressure on the aligned first and/or second optical components), a pressure is applied on the first optical component 120 and/or on the second optical component 140 in order to press the first adhesive film 130 to attach the first and the second optical components together with the first adhesive film 130.

In a non-illustrated step, an ultraviolet treatment and/or a temperature treatment are performed on the first transparent adhesive film before or after its assembly between the first and second optical components. These treatments allow a cure of possible voids appearing when attaching the first and/or the second optical component with the first transparent adhesive film 130.

In an example, the second optical component 140 is already fixed to a casing, for example a TOF sensor casing, prior to the step 516.

The method of Figure 6 is advantageous to increase the rate of production of the optical device 100.

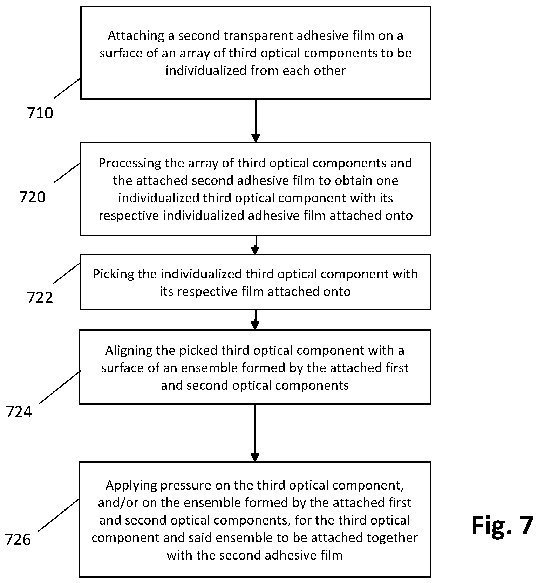

Figure 7 illustrates a method of fabricating the optical device of Figure 4 according to an embodiment. More precisely, the method of Figure 7 comprises additional successive process steps 710, 720, 722, 724 and 726 after the steps of Figure 5 and 6.

The step 710 (Attaching a second transparent adhesive film on a surface of an array of third optical components to be individualized from each other) is for example similar to the step 610 except that the array is an array of third optical components 420.

The step 720 (Processing the array of third optical components and the attached second adhesive film to obtain one individualized third optical component with its respective individualized adhesive film attached onto) is for example similar to step 620 except that the second transparent adhesive film 410 replaces the first transparent adhesive film 130 and the third optical components 420 replace the first optical components 120.

The step 722 (Picking the individualized third optical component with its respective film attached onto) is for example similar to the step 622 except that the second transparent adhesive film 410 replaces the first transparent adhesive film 130 and the third optical components 420 replaces the first optical components 120.

The step 724 (Aligning the picked third optical component with a surface of an ensemble formed by the attached first and second optical components) consists for example to align the picked third optical component 420 with a free surface of either the first or the second optical component from the ensemble formed by the attached first and second optical components obtained at step 516.

In the step 726 (Applying pressure on the third optical component, and/or on the ensemble formed by the attached first and second optical components, for the third optical component and said ensemble to be attached together with the second adhesive film) a pressure is applied on the third optical component 420 and/or on the ensemble formed by the attached first and second optical components 120, 140 in order to press the second adhesive film 410 to attach the third optical component 420 to the ensemble of the first and the second optical component with the second transparent adhesive film 410.

The method of Figure 7 is advantageous to increase the rate of production of the optical device 400.

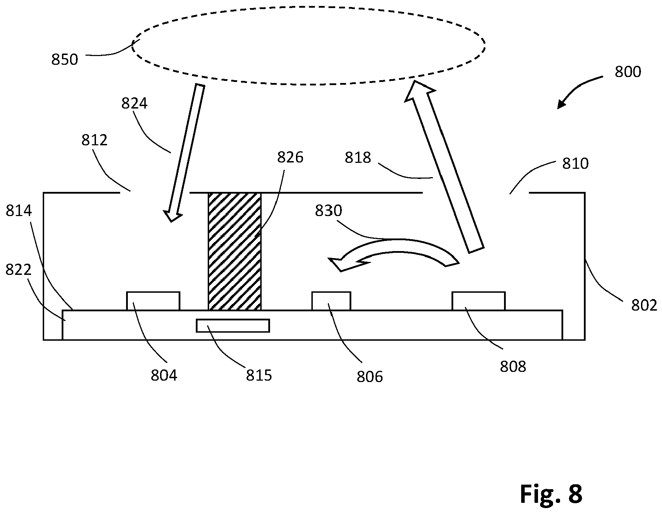

Figure 8 illustrates a cross section view of a time of flight sensor 800 according to an embodiment. In other words, the device for example aims at measuring distances by ToF. For example, the sensor 800 is a direct ToF sensor. For example, the optoelectronic device 800 is configured to be used in an imager, or image sensor, in order to generate depth images, sometimes referred to as depth maps, representing a scene.

The TOF sensor 800 of the figure 8 comprises, for example, an optional base substrate 822. The base substrate 822 is, for example, a silicon substrate such as a silicon integrated circuit or a silicon chip or a printed circuit board or other type of substrate.

The TOF sensor 800 for example comprises, mounted on a surface 814, such as an upper surface, of the base substrate 822, a light emitter 808, which is configured to emit light 818 into an image scene 850 and, for example, towards an optional reference sensor 806. The reference sensor 806 is also for example mounted on the surface 814, and is configured to detect light emitted by the light emitter 808.

The TOF sensor 800 also comprises, for example, a signal reception sensor 804 mounted on the surface 814. The signal reception sensor 804 is, for example, separated from the light emitter 808 by an optical barrier 826.

The base substrate 822 also, for example, comprises a control circuit 815. The control circuit 815 is, for example, coupled to the light emitter 808, to the reference sensor 806 and to the signal reception sensor 804, via connection pads (not illustrated) positioned on the surface 814 of the base substrate 822.

The optical barrier 826 is configured, for example, to prevent light emitted by the light emitter 808 from directly reaching the signal reception sensor 804. In the example of the figure 8, the optical barrier 826 is arranged between the upper surface 814 of the base substrate 822 and an inner surface of a packaging unit 802 in which the base substrate 822 is, for example, fixed. In this example, the optical barrier 826 is further arranged between the signal reception sensor 804 and the reference sensor 806. The packaging unit 802 comprises, for example, first and second apertures 810, 812.

The first aperture 810 is, for example, configured to provide a transparent opening through which at least part of the light emitted by the light emitter 808 is allowed to pass in order to illuminate the image scene 850. The first aperture 810 is for example aligned with an emitting surface of the light emitter 808. The first aperture 810 is for example filled by a transparent window, diffuser or lens (not illustrated) formed for example of glass.

The second aperture 812 is, for example, configured to provide an opening allowing return light 824, emitted by the light emitter 808 and reflected by the scene 850, to enter the packaging unit 802.

The reference photodetector 806 is, for example, arranged in the packaging unit 802 in a way to receive light emitted by the emitter, for example, by a direct light path and/or by reflection 830 on an inner surface of the packaging unit 802.

The signal reception sensor 804 has, for example, two or more electrodes. In an example, a top electrode is arranged on a top surface 828 of the signal reception sensor 804. The top electrode is, for example, connected to a connection pad of the base substrate 822 via a bonding wire which is not illustrated. One or more other electrodes of the signal reception sensor 804 are, for example, arranged on an underside of the signal reception sensor 804 and coupled, via one or more connection pads of the base substrate 822, to the control circuit 812.

The reference sensor 806 has, for example, two or more electrodes. In an example, a top electrode is arranged on a top surface of the reference sensor 806. The top electrode is, for example, connected to a connection pad of the base substrate 822 via a non-illustrated bonding wire. One or more other electrodes of the reference sensor 806 are, for example, arranged on an underside of the reference sensor and coupled, via one or more connection pads of the base substrate 822, to the control circuit 812.

The light emitter 808 has, for example, two or more electrodes. In an example, a top electrode is arranged on a top surface 138 of the light emitter 808. The top electrode is, for example, connected to a connection pad of the base substrate 822 via a bonding wire 816. One or more other electrodes of the light emitter 808 are, for example, arranged on an underside of the light emitter 808 and coupled, via one or more connection pads of the base substrate 822, to the control circuit 812.

In another example, the light emitter 808 is a vertical cavity surface emitting laser (VCSEL).

The reference sensor 806 for example comprises one or more pixels. The signal reception sensor 804 is for example formed of an array of pixels.

In the example of Figure 8, the light emitter 808 is for example a first optoelectronic comprising for example the optical device 100 or 400 where the second optical component is an optoelectronic device configured to emit light when a signal is applied to it and where the first optical component is a filter or a lens. In another example, the light emitter 808 is for example a first optoelectronic comprising for example the optical device 100 or 400 where the third optical component 420 is an optoelectronic device configured to emit light when a signal is applied to it and where the first optical component 120 is a lens and the second optical component is a filter, for example a near infrared filter.

In the example of Figure 8, the signal reception sensor 804 is for example a second optoelectronic device comprising for example the optical device 100 or 400 where the second optical component is an optoelectronic device configured to convert incoming light into a signal and where the first optical component is a filter or a lens. In another example, the signal reception sensor 804 is for example a second optoelectronic device comprising for example the optical device 100 or 400 where the third optical component 420 is an optoelectronic device configured to convert incoming light into a signal and where the first optical component 120 is a lens and the second optical component 140 is a filter, for example a near infrared filter.

Optionally the reference sensor 806 is another optoelectronic device which comprises for example the optical device 100 or 400 in an arrangement similar to the second optoelectronic device.

The TOF sensor of Figure 8 has enhanced optical performances compared to TOF sensors having optical components attached with glue such as epoxy.

Various embodiments and variants have been described. Those skilled in the art will understand that certain features of these embodiments can be combined and other variants will readily occur to those skilled in the art. In particular, even in the example of Figure 8, a base substrate 822 is described, in another example, the optoelectronic devices 804, 806 and/or 806 are embedded in a same electronic die which stands for the base substrate 822 or are coupled, or preferably connected, to different substrates.

In another example, the control circuit 815 is incorporated in said electronic die.

Finally, the practical implementation of the embodiments and variants described herein is within the capabilities of those skilled in the art based on the functional description provided hereinabove. In particular, concerning the methods of Figure 6 and 7 in which steps 610 and 710 can be replaced by another method steps leading to obtaining individual first or third optical elements without having the first or third optical components arranged in an array.

## Claims

1. An optical device (100, 400) comprising at least a first and a second optical component (120,140) attached together with a first transparent adhesive film (130) having at least two adhesive surfaces.

2. A method for fabricating an optical device (100, 400), comprising a step of attaching together a first and a second optical component (120,140) with a first transparent adhesive film (130) having at least two adhesive surfaces.

3. The method of claim 2, wherein the attaching step comprises of:
- attaching the first transparent adhesive film (130) on a surface of an array of first optical component (120) to be individualized from each other;
- processing the array and the attached adhesive film to obtain at least one individualized first optical component (120) with its respective individualized adhesive film attached onto;
- picking said at least one individualized first optical component (120) with its respective film attached onto;
- aligning the picked first optical component(120), with at least one second optical component (140); and
- applying pressure on the aligned first and/or second optical component (120,140) for the first and second optical component (120,140) to be attached together with the adhesive film.

4. The method of claim 3 further comprising the steps:
- attaching a second transparent adhesive film (410), having at least two adhesive surfaces, on a surface of an array of third optical components (420) to be individualized from each other;
- processing said array of third optical components (420)and the attached second transparent adhesive film (410) to obtain at least one individualized third optical component (420) with its respective individualized adhesive film attached onto;
- picking said at least one individualized third optical components (420) with its respective film attached onto;
- aligning the picked third optical component with a surface of an ensemble formed by the attached first and second optical component (120,140); and
- applying pressure on the third optical component, and/or on the ensemble formed by the attached first and second optical component (120,140), for the third optical component and said ensemble to be attached together with said second transparent adhesive film (410).

5. The method of claim 4, wherein the picked third optical component (420) is aligned with, and attached to, a surface of the first optical element of the ensemble.

6. The method of claim 5, wherein the picked third optical component is aligned with, and attached to, a surface of the second optical element of the ensemble.

7. The method of anyone of claims 2 to 6 further comprising the steps:
- apply an ultraviolet light irradiation treatment to the first transparent adhesive film (130); and
- apply a temperature treatment between 90 and 160°C after having applied pressure.

8. The optical device (100, 400) of claim 1, or the method of anyone of claims 2 to 7, wherein the first transparent adhesive film (130) has an optical transmittance above 50%, preferably above 90%, for wavelengths from 400nm to 1200nm.

9. The optical device (100, 400) of claim 1 or 8, comprising a third optical component attached, with a second transparent adhesive film having at least two adhesive surfaces, to an ensemble formed by the attached first and second optical component (120,140).

10. The optical device (100, 400) of claim 9, or the method of anyone of claims 4 to 8, wherein the second transparent adhesive film (410) has an optical transmittance above 50%, preferably above 90%, for wavelengths from 400nm to 1200nm.

11. The optical device (100, 400) of anyone of claim 1 or 8 to 10, or the method of anyone of claims 2 to 8 or 10, wherein the first transparent adhesive film (130) is a dicing die attach film.

12. The optical device (100, 400) of anyone of claims 1 or 8 to 11, or the method of anyone of claims 2 to 8 or 10 or 11, wherein the first transparent adhesive film (130) has a thickness between 10 and 35pm.

13. The optical device (100, 400) of anyone of claims 1 or 8 to 12, or the method of any of claims 2 to 8 or 10 to 12, wherein the first transparent adhesive film (130) has an optical index between 1,3 and 1,5.

14. The optical device (100, 400) of anyone of claims 1 or 8 to 13, or the method of anyone of claims 2 to 8 or 10 to 13, wherein the first optical component (120) is a lens, or an ultraviolet or visible or infrared light filter.

15. The optical device (100, 400) of anyone of claims 1 or 8 to 14, or the method of claims 2 to 8 or 10 to 14, wherein the second optical component (140) is a lens, or an ultraviolet or visible or infrared light filters, or an optoelectronic device configured to convert incoming light into a signal, or an optoelectronic device configured to emit light when a signal is applied to it.

16. The optical device (100, 400) of anyone of claims 1 or 8 to 15, or the method of claims 2 to 8 or 10 to 15, wherein the first transparent adhesive film (130) is an acrylic film.

17. The optical device (100, 400) of anyone of claims 1 or 8 to 16, or the method of claims 2 to 8 or 10 to 16, wherein the first transparent adhesive film (130) has at least one opening.

18. The optical device (100, 400) of anyone of claims 9, or 10 to 17 in their dependence to claim 9, or the method of anyone of claims 4 to 17, wherein the second transparent adhesive film (410) is similar to the first transparent adhesive film (130).

19. A time-of-flight sensor comprising:
- a first optoelectronic device (808) configured to emit light into an image scene (850); and
- a second optoelectronic device (804, 806) separated from the first optoelectronic device and configured to detect light reflected by the image scene;
the first and/or the second optoelectronic devices comprising the optical device (100, 400) of anyone of claims 1 or 8 to 18.
